Europäisches Patentamt

(19) European Patent Office

Office européen des brevets

(11) Publication number: **0 015 768**
**B1**

## (12) EUROPEAN PATENT SPECIFICATION

(45) Date of publication of patent specification: **15.06.83**

(21) Application number: **80300721.0**

(22) Date of filing: **07.03.80**

(51) Int. Cl.³: **B 29 B 1/02**

(54) **Resin cutting apparatus.**

(30) Priority: **08.03.79 JP 26197/79**

(43) Date of publication of application:
**17.09.80 Bulletin 80/19**

(45) Publication of the grant of the patent:
**15.06.83 Bulletin 83/24**

(84) Designated Contracting States:
**BE CH DE FR GB IT NL SE**

(56) References cited:
**DE - B - 1 811 493**
**GB - A - 1 092 413**
**US - A - 3 266 090**

(73) Proprietor: **JAPAN CROWN CORK CO. LTD.**
**31-5 Shinbashi 4-chome**
**Minato-ku, Tokyo (JP)**

(72) Inventor: **Fujiwara, Tatsuo**
**736-11 Oaza Kitatoyama Iruka Shinden**
**Komaki-shi Aichi-ken (JP)**
Inventor: **Watanabe, Masayasu**
**2-4-1 Toomizuka**
**Sendai-shi Miyagi-ken (JP)**
Inventor: **Yabumoto, Mikio**
**3-1 Oaza Haguro Aza Kanayama**
**Inuyama-shi Aichi-ken (JP)**
Inventor: **Kanemori, Takaaki**
**429-2 Oaza Ichinokuta Aza Showa**
**Komaki-shi Aichi-ken (JP)**
Inventor: **Seo, Hiroshi**
**5-3-1 Hatofukidai**
**Kani-machi Kani-gun Gifu-ken (JP)**

(74) Representative: **Haigh, Charles Roy et al,**
**J.A. KEMP & CO. 14 South Square Gray's Inn**
**London WC1R 5EU (GB)**

Resin cutting apparatus

## Field of the Invention

This invention relates to a resin cutting apparatus, and more specifically, to a resin cutting apparatus for cutting a resin extruded from an extrusion opening provided in a flat surface of an extrusion block disposed at the front end of an extruder.

## Description of the Prior Art

As disclosed in Japanese Patent Publication No. 20759/67 or Japanese Laid-Open Patent Publication No. 99186/77, in the formation of a sealing plastic liner in the shells of container closures of various types such as crown caps or screw caps, it is general practice to cut a resin extruded from an extrusion opening provided in a flat surface of an extrusion block disposed at the front end of an extruder by the action of a cutting blade rotating across the opening end of the extrusion opening, dispense the cut portion of the resin to a predetermined position within a shell, and then mold the resin in the shall into the desired shape.

In conventional apparatus for cutting a resin extruded from the extrusion opening provided on the flat surface of the extrusion block and distributing the cut portion of the resin to a shell, there is provided a rotating shaft substantially perpendicular to the flat surface of the extrusion block with its front end positioned opposite to the flat surface of the block, and a cutting tool is mounted on the front end of the rotating shaft such that a cutting blade formed on the front surface of the cutting tool (i.e., that surface of the cutting tool which faces the flat surface of the extrusion block) is rotated across the opening end of the extrusion opening. The cutting tool is mounted on the front end of the rotating shaft by forming integrally with the back surface of the cutting tool a mounting base extending substantially perpendicular to the cutting blade and along the axis of rotation, fitting the mounting base in a receiving portion formed on the front end of the rotating shaft so that the mounting base is slidable in the direction of the axis of rotation, interposing a spring between the mounting base of the cutting tool and the front end of the rotating shaft, and pressing the cutting tool elastically against the flat surface of the extrusion block by the elastic urging action of the spring. Accordingly, the cutting blade formed on the front surface of the cutting tool is brought into elastic contact with the flat surface of the exit block by the action of the spring, and is rotated across the opening end of the extrusion opening on the flat surface of the extrusion block by the rotational force which is transmitted to the mounting base of the cutting tool from the rotating shaft.

In order to properly cut the resin extruded from the extrusion opening in this type of plastics cutting apparatus and dispensing a predetermined amount of the cut resin to the predetermined position within a shell, it is important that the entire flat cutting edge of the cutting blade should make linear contact with the flat surface of the extrusion block. Otherwise, the resin would not be cut well and the time required for cutting would become somewhat longer to cause unallowable errors in the amount and position of the resin dispensed to the shell. In particular, when the cutting blade is rotated at high speed and the cutting and dispensing of the resin by means of the cutting blade are carried out at high speed, any increase in the time required for cutting the resin by the cutting blade would cause considerable errors in the amount and position of the resin dispensed to the shell.

In order to bring the entire flat cutting edge of the cutting blade into linear contact with the flat surface of the extrusion block, it is necessary in principle to dispose the rotating shaft fully perpendicular to the surface of the extrusion block, form the mounting base on the back surface of the cutting tool sufficiently perpendicular to the cutting edge on the front surface of the cutting tool, and also to mount the cutting tool on the front end of the rotating shaft while its mounting base is matched fully with the axis of rotation of the rotating shaft. As can be readily appreciated, however, it is extremely difficult, if not impossible, to meet all of these requirements. Accordingly, in the conventional plastic cutting apparatus, the entire flat cutting edge of the cutting blade does not make sufficiently good linear contact with the flat surface of the extrusion block, and this frequently causes errors in the amount and position of the resin dispensed to shells. Moreover, because the cutting blade does not make contact with the surface of the extrusion block as prescribed, the cutting blade undergoes localized wear, and its life is relatively short.

In some conventional resin cutting apparatus, the cutting tool is mounted such that its mounting base portion may tilt in a predetermined direction with respect to the front end of the rotating shaft. In such a structure, the error in the provision of the rotating shaft, the error in the formation of the mounting base, etc. could be partially corrected by the tilting of the mounting base toward the rotating shaft. The errors, however, can be corrected only in a very limited region in a predetermined direction in which the mounting base can tilt. The aforesaid problem, therefore, remains essentially unsolved. If the cutting tool is mounted such that its mounting base may tilt in any direction with respect to the front end of the rotating shaft, the aforesaid errors would be able to be fully corrected. But in the conventional apparatus, the direction of tilting of the mounting base of the cutting tool with respect to the rotating shaft is necessarily limited to a predetermined one because the rotation of the rotating shaft must be transmitted to the mounting base. Consequently, it is impossible in practice to make the mounting base of the cutting tool tilt in any desired direction with respect to the front end of the rotating shaft.

In addition to the above problem, in the conventional resin cutting apparatus, a mounting base portion extending substantially perpendicularly to the cutting blade and along the axis of rotation must be formed precisely on the back surface of the cutting tool whose front surface has a flat cutting edge formed therein. This naturally leads to an increased cost of production of the cutting tool.

Summary of the Invention

It is an object of this invention to provide a novel and excellent resin cutting apparatus in which if the surface of the extrusion block and the cutting edge of the cutting blade are sufficiently flat, the entire flat cutting edge can be brought into very good linear contact with the flat surface of the extrusion block irrespective of some errors in provision and production of the rotating shaft, etc. which may exist, thus obviating the aforesaid problems with the conventional resin cutting apparatus. An additional object of this invention is to provide a novel and excellent resin cutting apparatus, in which the cutting tool can be produced at a lower cost than in the conventional apparatus.

According to this invention, there is provided a resin cutting apparatus for cutting a resin extruded from an extrusion opening provided in a flat surface of an extrusion block, said apparatus, as with the apparatus described in JP—B—20759/67, comprising a rotating shaft disposed substantially perpendicular to the surface of the extrusion block with its front end positioned opposite to said surface; a drive mechanism for rotating the rotating shaft; and a cutting tool interposed between the surface of the extrusion block and the front end of the rotating shaft and having formed at its front surface facing the surface of said extrusion block at least one cutting blade having a flat cutting edge, at least the front end portion of the rotating shaft being urged elastically toward the surface of said extrusion block by the action of an elastic member so that the cutting tool is elastically pressed against the surface of the extrusion block, but the apparatus of this invention being characterised in that the front end portion of the rotating shaft abuts the rotating center on the back surface of the cutting tool so that the cutting tool can tilt in any direction with respect to the axis of rotation of the rotating shaft, and in that the rotating shaft has mounted thereon at least one drive pin which projects forward and comes into engagement with the cutting tool, and the rotation of the rotating shaft is transmitted to the cutting tool through the drive pin.

In a resin cutting apparatus of this invention, the transmission of the rotation of the rotating shaft to the cutting tool is performed not through the front end of the rotating shaft, but through at least one drive pin which is mounted separately therefrom on the rotating shaft, projects forward and comes into engagement with the cutting tool. Accordingly, the cutting tool can be tilted in any direction with respect to the front end of the rotating shaft without any inconveniences. Thus, only if the surface of the extrusion block and the cutting edge of the cutting tool are sufficiently flat, some errors in provision or production of the rotating shaft, etc. which may exist can be corrected by the tilting of the cutting tool in a desired direction. Consequently, the entire cutting edge of the cutting blade can be brought into very good linear contact with the surface of the extrusion block.

Furthermore, since in the resin cutting apparatus of this invention, it is not necessary to form precisely a mounting base extending substantially perpendicular to the cutting blade and along the axis of rotation in the back surface of the cutting tool as in the conventional apparatus, the cutting tool can be produced easily at low cost.

Brief Description of the Drawings

Figure 1 is a perspective view of one embodiment of the resin cutting apparatus of this invention;

Figure 2 is an exploded view of the resin cutting apparatus shown in Figure 1;

Figure 3 is a cross-sectional view of the resin cutting apparatus shown in Figure 1; and

Figures 4, 5 and 6 are fragmentary sectional views of modified embodiments respectively showing the relation between the end of a rotating shaft and a rotating center on the back surface of a cutting tool.

Detailed Description of Preferred Embodiments

Preferred embodiments of the resin cutting apparatus of this invention are described in detail below with reference to the accompanying drawings.

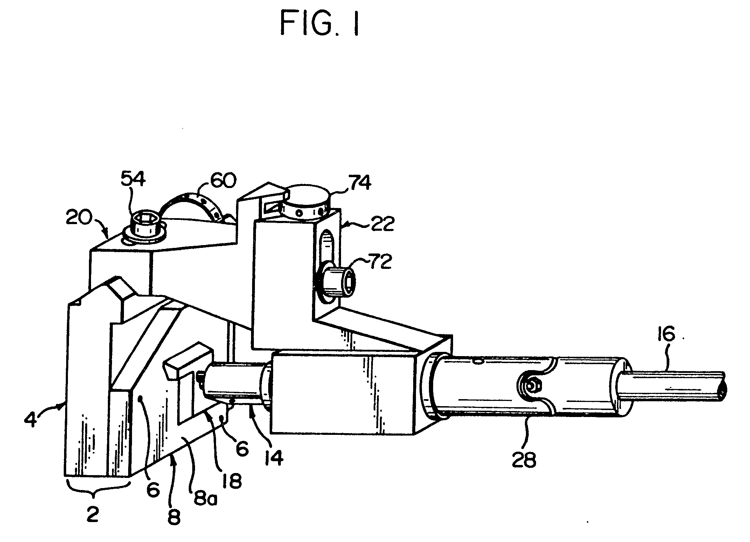

Referring to Figures 1, 2 and 3, an extrusion block 2 in the illustrated embodiment consists of a support member 4 and a panel 8 secured to the front surface of the support member 4 by screws 6. The panel 8 has formed therein an extrusion opening 10 opened at its surface 8a, and an extrusion passage 12 communicating with the extrusion opening 10 is formed in the support member 4. The surface 8a of the panel 8 forming part of the extrusion block 2 should be flat in a region including at least a portion in which the extrusion opening 10 is formed, so that a cutting blade (to be described in detail hereinbelow) for cutting a resin extruded from the extrusion opening 10 may be able to rotate across the open end of the extrusion opening. In the illustrated embodiment, the entire surface 8a of the panel 8 is formed flat, and the support member 4 and the panel 8 are arranged such that the surface 8a is substantially perpendicular.

The extrusion block 2 of the above construction which is known *per se* is secured to the front end of a suitable extruder (not shown), and thus, a molten resin is conveyed from the extruder into the extrusion opening 10 through the extrusion passage 12. The resin extruded from the extrusion opening 10 is cut by the resin cutting apparatus to be described below in detail, and dispensed to shells of container closures in the manner disclosed in the above-cited Japanese Patent Publication No. 20759/67 or Japanese Laid-Open Patent Publication No. 99186/77.

The resin cutting apparatus for cutting the resin extruded from the extrusion opening 10 is equipped with a rotating shaft 14, a drive mechanism for rotating the rotating shaft 14 (only the output shaft 16 of the drive mechanism is shown), and a cutting tool 18.

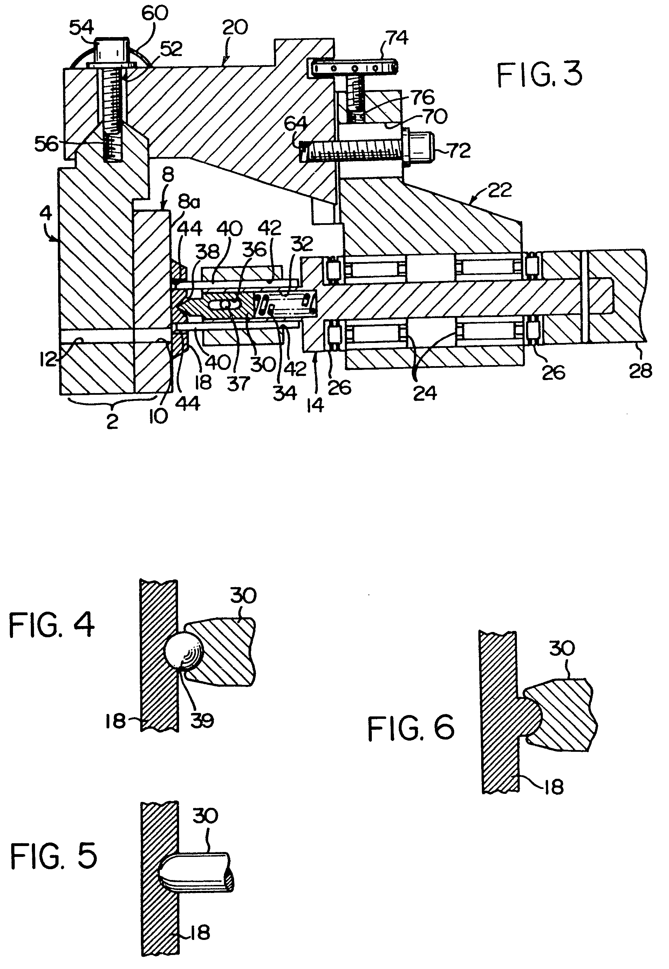

The rotating shaft 14 is supported, for example, by a needle bearing 24 and a thrust bearing 26 (see Figure 3) on a support block 22 supported on the extrusion block 2 through an auxiliary block 20 (the structures of the auxiliary block 20 and the support block 22 will be described below in detail) in such a manner that it is freely rotatable and is not movable in the axial direction. It is important that the rotating shaft 14 should be disposed substantially perpendicular to the surface 8a of the extrusion block which is arranged substantially perpendicularly, with its front end positioned opposite to said surface 8a. The rear end of the rotating shaft 14 is connected to the output shaft 16 of the drive mechanism by a free joint 28 known *per se*. The output shaft 16 of the drive mechanism is connected to a driving source (not shown) such as an electric motor through a suitable motion transmitting mechanism (not shown). It will be readily appreciated therefore that the rotating shaft 14 is rotated as prescribed by the actions of the drive mechanism including the drive source, the motion transmitting mechanism and the output shaft 16.

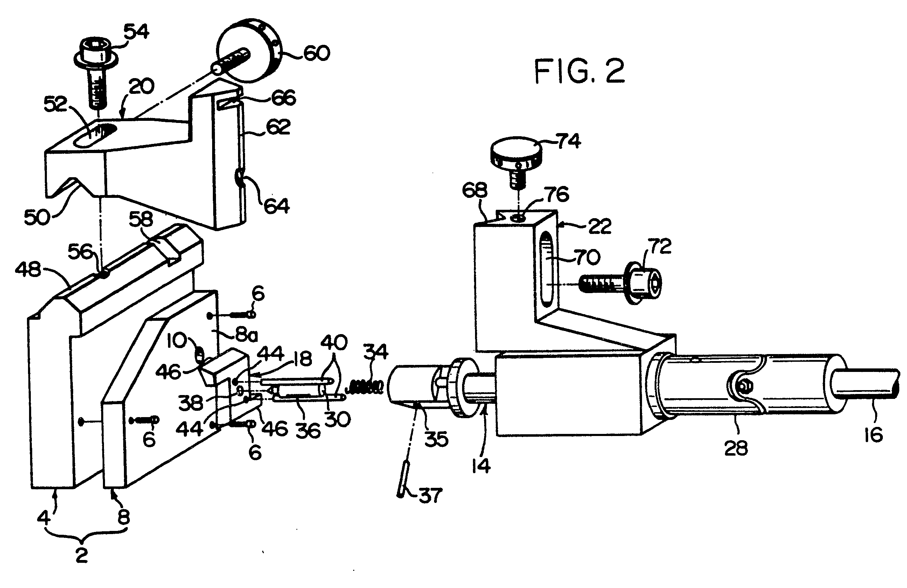

The front end of the rotating shaft 14 is defined by an end member 30 formed of a separate member from the main body portion of the rotating shaft 14 and fitted to the forward end of the main body portion. Described in detail with reference to Figures 2 and 3 in particular, an opening 32 having a predetermined depth and extending rearwardly in the direction of the axis of rotation is formed in the forward end of the main body portion of the rotating shaft 14, and the end member 30 is fitted in the opening 32. A spring 34 is interposed between the bottom surface of the opening 32 and the rear end of the end member 30, and the end member 30 is urged elastically toward the surface 8a of the extrusion block 2 by the elastic action of the spring 34. A slot 36 extending in the direction of the axial line is formed in the side surface of the end member 30, and a through-hole 35 extending across the opening 32 perpendicularly to the axis of rotation is formed in the main body portion 14. A pin 37 is inserted through the through-hole 35 and the slot 36. It will be clear therefore that by the cooperative action of the pin 37 and the slot 36, the movement of the end member 30 in the axial direction with respect to the rotating shaft 14 is restricted within a predetermined range. The forward end of the end member 30 projecting from the forward end of the main body portion of the rotating shaft 14, i.e. the front end of the rotating shaft 14, abuts the cutting tool 18 interposed between the surface 8a of the extrusion block 2 and the front end of the rotating shaft 14. Accordingly, the aforesaid elastic action of the spring 34 is transmitted to the cutting tool through the end member 30 to press the cutting tool 18 elastically against the surface 8a of the extrusion block 2. It is important that the front end of the rotating shaft 14 should abut the rotating center of the back surface of the cutting tool 18 (i.e., that side which is opposite to the side facing the surface 8a of the extrusion block 2), and that the cutting tool 18 should be adapted to tilt in any desired direction with respect to the axis of rotation of the rotating shaft 14. To achieve this end, in the illustrated embodiment shown in Figures 1 to 3, the forward end of the end member 30 is formed in a conical shape, and a conical recess 38 having a larger angle of apex than the angle of apex of the aforesaid conical end is formed in the rotating center of the back surface of the cutting tool 18. Thus, the conical end of the end member 30 is fitted into the conical recess 38 of the cutting tool 18. A similar operation and result may be obtained by forming the forward end of the end member 30 and the recess 38 of the cutting tool 18 in any desired pyramidal shape as in a polygonal pyramid such as a triangular or quadrangular pyramid instead of forming them in a conical shape. Furthermore, a similar operation and result may be obtained by employing modified constructions shown in Figures 4, 5 and 6 instead of forming the forward end of the end member in a pyramidal shape and providing a pyramidal recess 38 in the central rotating portion on the back side of the cutting tool 18. In the modified example shown in Figure 4, a hemispherical recess is formed in both of the forward end of the end member 30 and the rotating center on the back surface of the cutting tool 18, and a spherical body 39 which can be fitted partly in both of the recesses is disposed between the two hemispherical recesses. In the modified example shown in Figure 5, the forward end of the end member 30 is formed in a hemispherical shape, and a hemispherical recess is formed in the rotating center on the back side of the cutting tool 18. In this structure, the hemispherical forward end of the end member 30 is inserted in the hemispherical recess of the cutting tool 18. In the modified embodiment shown in Figure 6, contrary to the embodiment shown in Figure 5, a hemispherical recess is formed in the forward end of the end member 30, and a hemispherical projection is formed in the rotating center of the back side of the cutting tool. In this structure, the hemispherical projection of the cutting tool 18 is received by the hemispherical recess of the end member 30.

In the resin cutting apparatus in accordance with this invention, the cutting tool 18 is adapted to tilt in any desired direction with respect to the axis of rotation of the rotating shaft 14 by forming the front end of the rotating shaft 14 and the rotating center on the back side of the cutting tool 18 in the unique shapes. It will be readily appreciated therefore that although the cutting tool 18 is urged elastically against the surface 8a of the extrusion opening block 2 by the elastic action of the spring 34, which is transmitted through the front end of the rotating shaft 14, rotation is never transmitted in practice from the front end of the rotating shaft 14 to the cutting tool 18. In the resin cutting apparatus of this invention, at least one drive pin 40 projecting forward and engaged with the cutting tool 18 is secured to the rotating shaft 14, and the rotation of the rotating shaft 14 is transmitted to the cutting tool 18 by the drive pin 40.

In the embodiment shown in Figures 1, 2 and 3, two pin-fitting holes 42 extending in the direction of the axis of rotation are provided at a distance of 180 degrees from each other around the opening 32 at the forward end of the main body portion of the rotating shaft 14, and the drive pin 40 is inserted into each of the two pin-fitting holes 42. The cutting tool 18 has formed therein pin-receiving holes 44 corresponding respectively to the positions of the two drive pins 40. The forward end portion of each of the drive pins 40 which projects beyond the front end of the rotating shaft 14 is inserted into each of the pin-receiving hole 44, thereby drivingly engaging the drive pins 40 with the cutting tool 18. In order that the insertion of the drive pins 40 into the pin-receiving holes 44 may not hamper the aforesaid tilting of the cutting tool 18 in a desired direction, the inside diameter of each pin receiving hole 44 should be slightly larger than the outside diameter of each drive pin 40, thus providing some space between them. In this construction, the presence of the aforesaid space permits the aforesaid tilting of the cutting tool 18 in a desired direction over a predetermined range in spite of the fact that the rotation of the rotating shaft 14 is accurately transmitted to the cutting tool 18 *via* the drive pins 40.

In the illustrated embodiment, the pin-receiving holes 44 are provided in the cutting tool 18, and the forward end portions of the drive pins 40 are inserted into such pin-receiving holes 44. Alternatively, it is possible to merely bring the peripheral surface of the forward end portion of each drive pin 40 into contact with the side surface of the cutting tool 18, or with a suitable recess formed on the side surface of the cutting tool 18. Furthermore, in the illustrated embodiment, two drive pins 40 are used, but if desired, only one drive pin or three or more pins may be used. In view, however, of the need for transmitting the rotation of the rotating shaft 14 uniformly to the cutting tool 18, it is preferable to use two or more drive pins disposed symmetrically with respect to the axis of rotation of the rotating shaft 14.

At least one cutting blade (two blades in the illustrated embodiment) 46 is formed on the front surface of the cutting tool 18 (i.e., that side which faces the surface 8a of the extrusion block 2) as in a cutting tool of a conventional resin cutting apparatus. At least the cutting edge of the cutting blade 46 is formed flat (in the illustrated embodiment, not only the cutting edge but also the entire front surface of the cutting tool 18 are formed as the same flat plane).

In the resin cutting apparatus of this invention having the structure described hereinabove, even when the rotating shaft 14 is not sufficiently perpendicular to the surface 8a of the extrusion block 2 owing to errors in the making or provision of the rotating shaft 14, it is corrected by the tilting of the cutting tool 18 in any direction with respect to the axis of rotation of the rotating shaft 14. Accordingly, only if the surface 8a of the extrusion block 2 and the cutting edge of the cutting blade 46 are sufficiently flat, the entire cutting edge of the cutting blade 46 makes sufficiently good linear contact with the surface 8a of the block 2. (Since in the illustrated embodiment the entire front surface of the cutting tool 18 is formed as the same flat plane, not only the cutting edges of the cutting blades 46 but also the entire front surface of the cutting tool 18 makes very good planar contact with the surface 8a of the block 2.) Thus, according to the resin cutting apparatus of this invention, the resin extruded from the extrusion opening 10 opened in the surface 8a of the block 2 is properly cut as prescribed. Furthermore, the cutting blade 46 does not undergo localized wear, and its life becomes much longer than conventional ones.

Now, the constructions of the auxiliary block 20 and the support block 22 used to support the rotating shaft 14 are described in detail. As most clearly illustrated in Figure 2, a guide rail 48 extending substantially horizontally and substantially parallel to the surface 8a of the extrusion block 2 is formed on the top surface of the support member 4 for the extrusion block 2. The auxiliary block 20 has formed at its lower surface a receiving groove 50 having a shape corresponding to the shape of the guide rail 48, and a slender through slot 52 extending along the receiving groove 50. As is understood from Figures 1 to 3, the auxiliary block 20 is mounted on the extrusion block 2 by engaging the receiving groove 50 with the guide rail 48 and screwing a setscrew 54 through the slot 52 into a screw hole 56 formed in the guide rail 48. Furthermore, a recess 58 is formed near one end of the guide rail 48, and in the recess 58 is rested the head of an adjusting screw 60 whose stem is screwed into a screw hole (not shown) formed in the side surface of the auxiliary block 20. Thus, when the adjusting screw 60 is turned to change the degree of its screwing into the screw hole (not shown) formed on the side surface of the auxiliary block 20, the auxiliary block 20 is moved along the guide rail 48. It will be apparent therefore that by manipulating the adjusting screw 60, the position of mounting of the auxiliary block 20 on the extrusion block 2 can be properly adjusted in the direction of the guide rail (i.e., in a direction substantially horizontal and substantially parallel to the surface 8a of the extrusion block 2).

The support block 22 supporting the rotating shaft 14 is mounted on the auxiliary block 20 by the same mode of mounting as the mounting of the auxiliary block 20 on the block 2, so that its position may be adjusted freely in a substantially perpendicular direction. As most clearly illustrated in Figure 2, a guide rail 62 extending in a substantially perpendicular direction is formed in the end surface of the auxiliary block 20, and a screw hole 64 and a recess 66 are formed in the guide rail 62. The end surface of the support block 22 has formed therein a receiving groove 68 corresponding to the guide rail 62 and a through slot 70 extending along the receiving groove 68. The support block 22 is mounted on the auxiliary block 20, as can be understood from Figures 1 to 3, by engaging the receiving groove 68 with the guide rail 62 and screwing a setscrew 72 into the screw hole 64 *via* the through slot 70. Furthermore, the head of an adjusting screw 74 is rested in the recess 66, and its stem is screwed into a screw hole 76 formed on the top surface of the support block 22. Thus, by manipulating the adjusting screw 74, the position of mounting the support block 22 on the auxiliary block 20 can be adjusted properly in the direction of the guide rail 62 (i.e., in a substantially perpendicular direction).

The position of the rotating shaft 14, therefore, can be properly adjusted in a direction parallel to the surface 8a of the extrusion block 2 by manipulating the adjusting screws 60 and 74 as required. This consequently makes it possible to adjust the position of the cutting tool 18 with respect to the surface 8a of the extrusion block 2, particularly to the extrusion opening 10 provided in the surface 8a.

While the present invention has been described in detail hereinabove with reference to preferred embodiments of the resin cutting apparatus of this invention taken in conjunction with the accompanying drawings, it should be understood that various changes and modifications are possible without departing from the scope of the invention.

For example, in the illustrated embodiments, the front end of the rotating shaft 14 is defined by end member 30 separate from the main body portion, and only the end member 30 is urged elastically toward the surface 8a of the extrusion opening block 2 by the spring 34. If desired, however, it is possible to form the rotating shaft 14 as an integral unit, mount it movably in the direction of the axis of rotation, and to urge the entire shaft 14 elastically toward the surface 8a of the extrusion block 2 by a suitable spring.

## Claims

1. A resin cutting apparatus for cutting a resin extruded from an extrusion opening (10) provided in a flat surface (8a) of an extrusion block (2), said apparatus comprising a rotating shaft (14) disposed substantially perpendicular to the surface (8a) of the extrusion block (2) with its front end positioned opposite to said surface; a drive mechanism for rotating the rotating shaft (14); and a cutting tool (18) interposed between the surface (8a) of the extrusion block (2) and the front end of the rotating shaft (14) and having formed at its front surface facing the surface (8a) of said extrusion block at least one cutting blade (46) having a flat cutting edge; at least the front end portion of the rotating shaft (14) being urged elastically toward the surface (8a) of said extrusion block by the action of an elastic member (34), so that the cutting tool (18) is elastically pressed against the surface (8a) of the extrusion block (2), characterised in that the front end portion of the rotating shaft (14) abuts the rotating center on the back surface of the cutting tool (18) so that the cutting tool (18) can tilt in any direction with respect to the axis of rotation of the rotating shaft (14), and in that the rotating shaft (14) has mounted thereon at least one drive pin (40) which projects forward and comes into engagement with the cutting tool (18), and the rotation of the rotating shaft (14) is transmitted to the cutting tool (18) through the drive pin (40).

2. The apparatus of claim 1 wherein the front end portion of said rotating shaft (14) is formed of a separate end member (30) mounted on the main body of said rotating shaft such that it is freely movable in the direction of the axis of rotation of the rotating shaft (14), and said elastic member (34) is interposed between said end member and said main body.

3. The apparatus of claim 1 or 2 wherein the front end of said rotating shaft is formed in a conical or pyramidal shape, and the rotating center of the back surface of said cutting tool (18) has formed therein a conical or pyramidal recess (38) for receiving the front end of said rotating shaft which has a larger angle of apex than that of the conical or pyramidal end of said rotating shaft.

4. The apparatus of claim 1 or 2, wherein a hemispherical recess is formed in both of the front end of the rotating shaft (14) and the rotating center of the back surface of the cutting tool (18), a spherical body (39) is disposed partly fitted in both of these recesses, and the front end of said rotating shaft elastically abuts the rotating center of the back surface of the cutting tool (18) *via* said spherical body.

5. The apparatus of claim 1 or 2, wherein the front end of the rotating shaft (14) is formed in a hemispherical shape, and the rotating center of the back surface of said cutting tool (18) has formed therein a hemispherical recess for receiving the front end of said rotating shaft.

6. The apparatus of claim 1 or 2 wherein a hemispherical recess is formed in the front end of the rotating shaft (14), and the rotating center of the back surface of the cutting tool (18) has formed therein a hemispherical projection adapted to be received in the recess of the front end of the rotating shaft (14).

7. The apparatus of any one of claims 1 to 6 wherein a plurality of drive pins (40) which project forward and come into engagement with said cutting tool (18) are mounted on said rotating shaft (14) so that they are symmetrical with respect to the axis of rotation of said rotating shaft.

8. The apparatus of any one of claims 1 to 7, wherein said rotating shaft (14) is disposed such that its position can be adjusted freely in a direction parallel to the surface (8a) of said extrusion block (2).

9. The apparatus of claim 8 wherein said surface (8a) of said extrusion block (2) is disposed substantially perpendicularly, said extrusion block has mounted thereon an auxiliary block (20) substantially parallel to said surface with its position adjustable in a substantially horizontal direction, said auxiliary block has mounted thereon a support block (22) so that the position of the support block can be adjusted in a substantially perpendicular direction, and wherein said rotating shaft (14) is supported by said support block.

**Patentansprüche**

1. Harz-Schneidvorrichtung zum Schneiden eines aus einer in einer ebenen Fläche (8a) eines Extruderblocks (2) vorgesehenen Spritzöffnung (10) extrudierten Harzes, wobei die Vorrichtung eine im wesentlichen rechtwinklig zur Fläche (8a) des Extruderblocks (2) angeordnete Drehwelle (14), deren frontseitiges Ende der Fläche gegenüberliegt, einen die Drehwelle (14) in Umdrehung versetzenden Antriebsmechanismus und ein zwischen die Fläche (8a) des Extruderblocks (2) sowie das frontseitige Ende der Drehwelle (14) eingesetztes Schneidwerkzeug (18), an dessen der Fläche (8a) des Extruderblocks zugewandten Frontfläche wenigstens eine Schneidklinge (46) mit einer planen Schneidkante ausgebildet ist, umfaßt und wobei wenigstens der frontseitige Endabschnitt der Drehwelle (14) durch ein elastisches Element (34) zur Fläche (8a) des Extruderblocks elastisch beaufschlagt ist, so daß das Schneidwerkzeug (18) elastisch gegen die Fläche (8a) des Extruderblocks (2) gepreßt wird, dadurch gekennzeichnet, daß der frontseitige Endabschnitt der Drehwelle (14) elastisch an das Drehzentrum auf der Rückfläche des Schneidwerkzeugs (18) stößt, so daß das Schneidwerkzeug (18) in jeder Richtung mit Bezug auf die Drehachse der Drehwelle (14) kippen kann, und daß die Drehwelle (14) wenigstens einen an ihr befestigten Mitnehmerstift (40) hat, der vorwärts ragt und mit dem Schneidwerkzeug (18) zum Eingriff kommt, wobei die Drehung der Drehwelle (14) durch den Mitnehmerstift (40) auf das Schneidwerkzeug (18) übertragen wird.

2. Vorrichtung nach Anspruch 1, wobei der frontseitige Endabschnitt der Drehwelle (14) als ein gesondertes Endstück (30) ausgebildet ist, das am Hauptteil der Drehwelle derart befestigt ist, daß es frei in Richtung der Drehachse der Drehwelle (14) bewegbar ist, und wobei das elastische Element (34) zwischen das Endstück sowie das Hauptteil eingesetzt ist.

3. Vorrichtung nach Anspruch 1 oder 2, wobei das frontseitige Ende der Drehwelle mit konischer oder pyramidenförmiger Gestalt ausgebildet und im Drehzentrum der Rückfläche des Schneidwerkzeugs (18) eine konische oder pyramidenförmige Vertiefung (38), die einen größeren Scheitelwinkel als das konische oder pyramidenförmige Ende der Drehwelle hat, zur Aufnahme des frontseitigen Endes der Drehwelle ausgestaltet ist.

4. Vorrichtung nach Anspruch 1 oder 2, wobei sowohl im frontseitigen Ende der Drehwelle (14) als auch im Drehzentrum der Rückfläche des Schneidwerkzeugs (18) eine halbkugelförmige Vertiefung ausgebildet sind, ein kugelförmiger Körper (39), der teilweise in diese beiden Vertiefungen eingepaßt ist, vorhanden ist und das frontseitige Ende der Drehwelle elastisch an das Drehzentrum der Rückfläche des Schneidwerkzeugs (18) vermittels des kugelförmigen Körpers stößt.

5. Vorrichtung nach Anspruch 1 oder 2, wobei das frontseitige Ende der Drehwelle (14) mit halbkugelförmiger Gestalt ausgebildet ist und das Drehzentrum der Rückfläche des Schneidwerkzeugs (18) eine darin ausgestaltete halbkugelförmige Vertiefung zur Aufnahme des frontseitigen Endes der Drehwelle hat.

6. Vorrichtung nach Anspruch 1 oder 2, wobei im frontseitigen Ende der Drehwelle (14) eine halbkugelförmige Vertiefung ausgebildet ist und das Drehzentrum der Rückfläche des Schneidwerkzeugs eine darin ausgestaltete halbkugelförmige Erhebung hat, die in der Vertiefung des frontseitigen Endes der Drehwelle (14) aufnehmbar ist.

7. Vorrichtung nach einem der Ansprüche 1 bis 6, wobei an der Drehwelle (14) eine Mehrzahl von Mitnehmerstiften (40), die vorwärts ragen und mit dem Schneidwerkzeug (18) zum Eingriff kommen, befestigt ist, so daß sie mit Bezug zur Drehachse der Drehwelle symmetrisch sind.

8. Vorrichtung nach einem der Ansprüche 1 bis 7, wobei die Drehwelle (14) derart angeordnet ist, daß ihre Lage in einer zur Fläche (8a) des Extruderblocks (2) parallelen Richtung frei eingestellt werden kann.

9. Vorrichtung nach Anspruch 8, wobei die Fläche (8a) des Extruderblocks (2) im wesentlichen lotrecht angeordnet ist, am Extruderblock ein Zwischenblock (20), dessen Lage in einer im wesentlichen horizontalen Richtung einstellbar ist, im wesentlichen parallel zu der Fläche befestigt ist, am Zwischenblock ein Lagerblock (22) gehalten ist, so daß die Lage des Lagerblocks in einer im wesentlichen lotrechten Richtung eingestellt werden kann, und wobei die Drehwelle (14) vom Lagerblock getragen ist.

## Revendications

1. Appareil de découpage de résine pour découper une résine extrudée à partir d'un orifice d'extrusion (10) ménagé dans une surface plane (8a) d'un bloc d'extrusion (2), ledit appareil comprenant un arbre tournant (14) disposé essentiellement perpendiculairement à la surface (8a) du bloc d'extrusion (2), son extrémité avant étant positionnée en regard de ladite surface; un mécanisme d'entraînement pour faire tourner l'arbre tournant (14); et un outil de coupe (18) interposé entre la surface (8a) du bloc d'extrusion (2) et l'extrémité avant de l'arbre tournant (14) et étant pourvu dans sa surface avant dirigée vers la surface (8a) du bloc d'extrusion d'au moins une lame de coupe (46) comportant un bord de coupe plat; au moins la partie extrême avant de l'arbre tournant (14) étant poussée élastiquement vers la surface (8a) du bloc d'extrusion par la force d'un élément élastique (34) de manière que l'outil de coupe (18) soit élastiquement appliqué contre la surface (8a) du bloc d'extrusion (2), caractérisé par le fait que la partie extrême avant de l'arbre tournant (14) vient buter contre le centre de rotation sur la surface arrière de l'outil de coupe (18), de manière que l'outil de coupe (18) puisse s'incliner dans une direction quelconque par rapport à l'axe de rotation de l'arbre tournant (14) et que l'arbre tournant (14) porte au moins une broche d'entraînement (40) qui fait saillie vers et entre en contact avec l'outil de coupe (18), la rotation de l'arbre tournant (14) étant transmise à l'outil de coupe (18) par l'intermédiaire de la broche d'entraînement (40).

2. Appareil selon la revendication 1, dans lequel la partie extrême avant dudit arbre d'entraînement (14) est formée par un élément extrême séparé (30) qui est monté sur le corps principal de l'arbre tournant de façon à pouvoir se déplacer librement dans la direction de l'axe de rotation de l'arbre tournant (14), et ledit élément élastique (34) est interposé entre ledit élément extrême et ledit corps principal.

3. Appareil selon l'une des revendications 1 ou 2 dans lequel l'extrémité avant dudit arbre tournant est pourvue d'une forme conique ou pyramidale et le centre de rotation de la surface arrière de l'outil de coupe (18) est pourvu d'un évidement conique ou pyramidal (38) destiné à recevoir l'extrémité avant de l'arbre tournant qui a un plus grand angle au sommet que celui de l'extrémité conique ou pyramidale dudit arbre tournant.

4. Appareil selon l'une des revendications 1 ou 2, dans lequel un évidement hémisphérique est ménagé dans l'extrémité avant de l'arbre tournant (14) et le centre de rotation de la surface arrière de l'outil de coupe (18), un corps sphérique (39) est engagé en partie dans les deux évidements précités, et l'extrémité avant dudit arbre tournant vient buter élastiquement contre le centre de rotation de la surface arrière de l'outil de coupe (18) par l'intermédiaire dudit corps sphérique.

5. Appareil selon l'une des revendications 1 ou 2, dans lequel l'extrémité avant de l'arbre tournant (14) est pourvue d'une forme hémisphérique et le centre de rotation de la surface arrière dudit outil de coupe (18) est pourvu d'un évidement hémisphérique destiné à recevoir l'extrémité avant dudit arbre tournant.

6. Appareil selon l'une des revendications 1 ou 2, dans lequel un évidement hémisphérique est formé dans l'extrémité avant de l'arbre tournant (14) et le centre de rotation de la surface arrière de l'outil de coupe (18) est pourvu d'une saillie hémisphérique agencée pour être engagée dans l'évidement de l'extrémité avant de l'arbre tournant (14).

7. Appareil selon l'une quelconque des revendications 1 à 6, dans lequel plusieurs broches d'entraînement (40) qui font saillie vers l'avant et entrent en contact avec l'outil de coupe (18) sont montées sur ledit arbre tournant (14) de manière symétrique par rapport à l'axe de rotation dudit arbre tournant.

8. Appareil selon l'une quelconque des revendications 1 à 7, dans lequel ledit arbre tournant (14) est disposé de manière que sa position puisse être réglée librement dans une direction parallèle à la surface (8a) du bloc d'extrusion (2).

9. Appareil selon la revendication 8, dans lequel ladite surface (8a) dudit bloc d'extrusion (2) est disposée essentiellement perpendiculairement, ledit bloc d'extrusion porte un bloc auxiliaire (20) essentiellement parallèle à ladite surface et dont la position est réglable dans une direction essentiellement horizontale, ledit bloc auxiliaire porte un bloc porteur (22) de manière que la position du bloc porteur puisse être ajustée dans une direction essentiellement perpendiculairement, et ledit arbre tournant (14) est supporté par ledit bloc porteur.

# FIG. I

FIG. 2

FIG. 3

FIG. 4

FIG. 5

FIG. 6